# EUROPEAN PATENT APPLICATION

(11) **EP 4 086 694 A1**
(43) Date of publication of application: **09.11.2022**
(21) Application number: 21172656.7
(22) Date of filing: 07.05.2021
(51) Int. Cl.: G02C 7/06, G02C 7/02

(54) **ESTABLISHING A PROGRESSION PROFILE FOR A POWER-VARIATION LENS AND DETERMINING A SPECTACLE LENS DESIGN**

(71) Applicant: Carl Zeiss Vision International GmbH, 73430 Aalen (DE)
(72) Inventor: WELSCHER, Monique, 73492 Rainau (DE); LISCHER, Christian, 73431 Aalen (DE)
(74) Representative: PATERIS Patentanwälte PartmbB

(57) **Abstract**

A method of establishing a progression profile for a power-variation lens is provided. The method comprises the steps of:
- determining a progression of focal power between a distance power and a near power; and
- establishing the progression profile based on the determined progression of focal power and a path (7) along which the gaze direction changes when the gaze changes from distance vision to near vision.
Determining the progression of focal power is done based on accommodation measurement data representing a need for accommodation assistance as individually measured for the wearer for a number of object distances.

Moreover, systems for performing the methods as well as computer programs and non-volatile computer readable storage media with instructions for performing the methods are provided.

## Description

The present invention relates to methods of establishing a progression profile for a power-variation lens and of determining a spectacle lens design for a power-variation lens including a corridor, where the power-variation lens may be progressive addition lens (PAL). In addition, the invention relates to computer programs for establishing a progression profile for a power-variation lens and for determining a spectacle lens design for a power-variation lens including a corridor, to non-volatile computer readable storage media with instructions stored thereon for establishing a progression profile for a power-variation lens and for determining a spectacle lens design for a power-variation lens including a corridor, and to data processing systems for establishing a progression profile for a power-variation lens and for determining a spectacle lens design for a power-variation lens including a corridor. Furthermore, the invention relates to an apparatus for establishing a progression profile for a power-variation lens or a spectacle lens design for a power-variation lens including a corridor.

A spectacle lens design for a power-variation lens such as a progressive-addition lens, is usually the result of an optimization process. For the optimization process, a power distribution defining the focal power to be achieved in a number gaze directions (typically at least 1000 gaze directions), is determined based at least on the wearer's individual prescription values, which include at least distance power and addition, and an object distance model defining an object distance for each one of the number of gaze directions. While the distance power can be measured for the relaxed eye determining the addition needs to take into account the accommodation of the eye when changing from distance vision to near vision. This is because the eye can focus onto an object at near distance with different focal powers provided by the spectacle lens as the eye can accommodate differently for different focal powers within certain limits. A suitable addition may be determined from subjective refraction measurement by use of a model describing the accommodation of the eye, or from a measurement the wearer's depth of field of the wearer, as described in DE 10 2009 004 866 B4. The latter allows increasing an individual adaption of a progressive addition lens to a specific wearer.

In the optimization process, a parameterized working surface of a numerical representation of the spectacle lens the design of which is to be determined may be defined and optimized by varying the parameters. Such a working surface may be represented by ray passing points which are points of the working surface through which rays which run, outgoing from the eye, in the gaze directions given by the object distance model pass the working surface. The parameters of the working surface are iteratively optimized with a value of a merit function being calculated after each iteration. The iterations are repeated until the value of the merit function meets a termination condition, for example reaches a minimum or undershoots a given value. The merit function may, for example, be a weighted sum of allowable deviations, where each allowable deviation represents a deviation of the focal power actually achieved with the current iteration of the working surface in the direction of a ray passing point from a focal power defined by the power distribution for the corresponding gaze direction. When the termination condition is met the optimization is finished. The numerical representation of the spectacle lens with the optimized working surface then represents the desired spectacle lens design. Such an optimization process is, for example, described in EP 2 564 262 B1.

The power distribution which is used in the optimization process includes a progression profile which describes the progression of focal power for a path along which the gaze direction changes when the gaze changes from distance vision to near vision. The path along which the gaze direction is typically derived from the object distance model and the progression of focal power along this path is derived from a progression model. Such progression models typically describe a linear progression of focal power for the path along which the gaze direction changes. However, the progression of focal power a wearer actually needs along said path may deviate from a linear progression of focal power. Sometimes progression models with a non-linear progression of focal power are used which gives more flexibility in modeling the progression profile. However, there is still room for improvements in determining a suitable progression profile and for improvements in determining spectacle lens designs for power-variation lenses with corridors having suitable progression profiles. Hence, although determining the progression of focal power based on such models leads to power-variation lenses with progression profiles that are satisfying for a large number of wearers the resulting power-variation lenses are less comfortable for an individual wearer than they could be.

With respect to EP 2 564 262 B1 it is a first objective of the present invention to provide methods of establishing a progression profile for a corridor of a spectacle lens design by which a high comfort can be achieved for a wearer of a spectacle lens with such a progression profile.

It is a second objective of the present invention to provide methods of determining of a spectacle lens design, by which a high comfort can be achieved for a wearer of a spectacle lens that is based on a spectacle lens design.

It is a third objective of the present invention to provide computer programs, non-volatile computer readable storage media, and data processing systems for establishing a progression profile for a corridor of a spectacle lens design and for determining a spectacle lens design, respectively, by which a high comfort can be achieved for a wearer of a spectacle lens that has a progression profile established according to the inventive method of establishing a progression profile or is based on a spectacle lens design determined according the inventive method of determining of an individual spectacle lens design.

It is a fourth objective of the present invention to provide an apparatus for establishing a progression profile for a corridor of a spectacle lens design for a power-variation lens, which allows for establishing a progression profile that is highly adapted to a wearer of a spectacle lens that has a corresponding progression profile.

The first objective is achieved by a computer implemented method of establishing a progression profile as claimed in claim 1 and by a method of establishing a progression profile as claimed in claim 19.

The second objective is achieved by a computer implemented method determining a spectacle lens design as claimed in claim 6 and by a method determining a spectacle lens design as claimed in claim 20.

The third objective is achieved by a computer program for establishing a progression profile as claimed in claim 11, by a computer program for determining a spectacle lens design as claimed in claim 12, by a non-volatile computer readable storage medium for establishing a progression profile as claimed in claim 13, by a non-volatile computer readable storage medium for determining a spectacle lens design as claimed in claim 14, by a data processing system for establishing a progression profile as claimed in claim 15, and by a data processing system for determining a spectacle lens design as claimed in claim 16.

The fourth objective of the present invention is achieved by an apparatus for establishing a progression profile as claimed in claim 17.

The depending claims contain advantageous developments of the invention.

The following definitions are used within the scope of the present description:
spectacle lens
   The term "spectacle lens" refers to an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1),
vertex power
   The term "vertex power" refers to the reciprocal of the paraxial vertex focal length (DIN ISO 13666:2019, section 3.10.7), which represents the distance between the vertex of the lens and the focus.
focal power
   The term "focal power" is a general term including the spherical vertex power and the cylindrical vertex power of a lens (DIN ISO 13666:2019, section 3.10.2).
dioptric power
   The term "dioptric power" is a general term comprising the focal power and the prismatic power of a lens (DIN ISO 13666:2019, section 3.10.3).
distance power
   The expression "distance power" refers to the dioptric power for distance vision (DIN ISO 13666:2019, section 3.16.1).
near power
   The expression "near power" refers to the dioptric power for near vision (DIN ISO 13666:2019, section 3.16.2).
power-variation lens
   A power variation-lens is a spectacle lens with a smooth variation of focal power over part or all of its area, without discontinuity, designed to provide more than one focal power (DIN ISO 13666:2019, section 3.7.7).
progressive addition lens
   A progressive addition lens is a power-variation lens with two reference points for focal power, generally designed to provide correction for presbyopia and clear vision from distance to near (DIN ISO 13666:2019, section 3.7.8).
Addition
   The term addition, also called addition power, applies to the difference between the vertex power of the near portion and the vertex power of the distance portion (DIN ISO 13666:2019, section 3.16.3).
distance portion
   The term "distance portion" refers to a portion of a progressive-power lens having the dioptric power for distance vision (DIN ISO 13666:2019, section 3.15.1).
near portion
   The term "near portion" refers to a portion of a progressive-power lens having the dioptric power for near the vision distance (DIN ISO 13666:2019, section 3.15.3).
corridor
   The term "corridor" refers to a portion of a power-variation lens providing the intended change in focal power (DIN ISO 13666:2019, section 3.15.26).
progression of focal power
   In the context of the present invention, the term "progression of focal power" to denominate the change of focal power needed for vision correction for object distances changing from far to near.
path
   In the context of the present invention, the term "path" is used to denominate to a line of minimum cylindrical surface power on the power-variation surface in the corridor.
progression profile
   In the context of the present invention, the term "progression profile" is used to denominate the progression of focal power along the path.
gaze direction
   In the context of the present invention, the term "gaze direction" refers to a line outgoing from the pupil center of the eye towards an object of interest.
distance vision
   In the context of the present invention, the term "distance vision" is used for vision when gazing at an object of interest with the object being at an object distance larger than a few meter, typically larger two meter.
near vision
   In the context of the present invention, the term "distance vision" is used for vision when gazing at an object of interest with the object being at an object distance below 0,5 meter, for example a typical reading distance like 40 cm.
accommodation assistance
   In the context of the present invention, the term "accommodation assistance" refers to the assistance needed to allow to accommodate the eye so as to focus on an object. This assistance is provided by a focal power.
accommodation measurement data
   In the context of the present invention, the term "accommodation measurement data" refers to data representing for different object distances the focal powers needed to assist accommodation where the focal powers are based on a measurement. The focal powers do not need to be the actual measurement data but may be data calculated from the measurement data actually measured.
near accommodation measurement data
   In the context of the present invention, the term "near accommodation measurement data" refers to data representing for the near object distance the focal power needed to assist accommodation where the focal power is based on a measurement. The focal power does not need to be the actual measurement data but may be data calculated from the measurement data actually measured.
object distance
   In the context of the present invention, the term "object distance" refers to a distance between the eye and an object in the gaze direction. An object distance below 0,5 meter, for example a typical reading distance like 40 cm is called near object distance in the context of the present invention.
number of object distances
   In the context of the present invention, the term "number of object distances" refers to the quantity of different object distances for which the accommodation measurement data contains focal powers to assist accommodation.
accuracy of accommodation measurement data
   In the context of accommodation measurement data, the term "accuracy" refers to the accuracy of the focal power needed to assist accommodation as derived from the measurement.
case history
   In the context of the present invention, the term "case history" refers to information about the viewing behavior. of a spectacle lens wearer.
eye movement measurement data
   In the context of the present invention, the term "eye movement measurement data" refers to refers to data representing the measured eye movement for a gaze change from distance vision to near vision.
spectacle lens design
   In the context of the present invention, the term "spectacle lens design" is used to denominate the calculated distribution of optical properties of a spectacle lens.
power distribution
   In the context of the present invention, the term "power distribution" refers to a distribution of focal power across an effective area of a spectacle lens design as perceived by a wearer wearing a spectacle lens according to the spectacle lens design.
target design
   In the context of the present invention, the term "target design" refers to the specification of a distribution of allowed image aberrations over the spectacle lens or of surface properties of the spectacle lens, which should be achieved in an optimization process. In the first case, reference is made to an optical target design and reference is made to a surface target design in the second case. Accordingly, an optical target design is the specification of a distribution of image aberrations over the entire spectacle lens or else, there beyond, in the spectacle wearer beam path (e.g., astigmatic residual deviation, spherical residual deviation, prism, horizontal symmetry, distortion, or else higher order aberrations such as, e.g., coma). Additionally, the optical target design may contain specifications for the astigmatic and spherical residual deviations at reference points (e.g., distance design reference point or near design reference point) or the addition in the measurement beam path of a measuring device, e.g., in the beam path of a vertex power measuring device. By contrast, a surface target design specifies surface properties of the surface to be formed that should be achieved in the optimization process, for example a surface power and a surface astigmatism. Here, the surface power is a measure for the ability of a surface section surrounding an optimization point to change the vergence (refractive index of the spectacle lens material divided by the radius of curvature of the wavefront) of a beam incident on the surface section from the air. The surface astigmatism at an optimization point represents the difference of the surface powers in the principal meridians at an optimization point of the surface. Provided the text below does not specifically refer to an optical target design or a surface target design but only to a target design, the term "target design" should always comprise both types of target design.
location of the corridor
   In the context of the present invention, the term "location of the corridor" refers to the position of the corridor relative to the distance portion and the near portion of a progressive addition lens.
length of the corridor
   In the context of the present invention, the term "length of the corridor" refers to the dimension of the corridor along the path, i.e. along the line of minimum cylindrical surface power on the power-variation surface in the corridor.
width of the corridor
   In the context of the present invention, the term "width of the corridor" refers to the dimension of the corridor perpendicular to the path, i.e. perpendicular to the line of minimum cylindrical surface power on the power-variation surface in the corridor
Optimizing a numerical representation of a spectacle lens
   Within the scope of the present invention, the term "optimizing a numerical representation of a spectacle lens means carrying out a computer-assisted process, in which the numerical representation of a spectacle lens is described with the aid of at least one parameterized function describing the numerical representation, typically with the aid of a plurality of parameterized functions, in which a target property to be achieved by the spectacle lens is predetermined and in which a merit function is specified, the value(s) of which specifying a deviation of the property achieved by the current parameter value(s) of the parameterized function(s) from the target property, with the parameter value(s) of the parameterized function(s) being varied until the value(s) of the merit function satisfies or satisfy a termination criterion that leads to the termination of the variation of the parameter value or of the parameter values.
numerical representation of a spectacle lens
   In the context of the present invention, the term "numerical representation of a spectacle lens" refers to a numerical data set describing the design features of a spectacle lens, in particular, the refractive index of the lens material and the curvatures of the lens surfaces.
Prescription
   The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain a prism value. Moreover, the prescription may contain further values, for example the "add" value in the case of multifocal spectacle lenses, said "add" value specifying the difference between the vertex power in the near portion of the spectacle lens and in the distance portion of the spectacle lens. A value "PD" for the interpupillary distance may also be contained in the prescription.

The present invention provides a computer implemented method of establishing a progression profile for a power-variation lens. The method comprises the steps of determining a progression of focal power between a distance power and a near power; and establishing the progression profile based on the determined progression of focal power and a path along which the gaze direction changes when the gaze changes from distance vision to near vision. The path along which the gaze direction changes may, for example, be derived from an object distance model or from a measurement of the eye movement. Determining the progression of focal power is done based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances. The focal power may include at least one of a spherical power and a cylindrical power. The accommodation measurement data may be measured by a measuring device and received by or input to a computer which performs the computer implemented method of establishing a progression profile. Measuring the accommodation measurement data may be done by measuring the depth of field of the wearer's eye for a number of object distances, i.e. the wearer's ability to accommodate to these object distances. The measurement may be performed with a measuring device directly connected to the computer or with a measuring device located elsewhere. In the latter case, the accommodation measurement data may be obtained by the computer via a network or via a storage medium such as a DVD, a flash memory, etc.

In the state of the art, models are used to determine the progression of focal power in the progression profile. Many of these models rely on a linear progression of focal power in the corridor which may not represent the progression of focal power the individual wearer actually needs. Sometimes models assuming a non-linear progression of focal power are used. However, such models still do not represent the progression of focal power an individual wearer actually needs. Hence, although determining the progression of focal power based on such models leads to progression profiles that are satisfying for a large number of wearers these progression profiles are less comfortable for an individual wearer than they could be. In the inventive method, an improvement of comfort is achieved by using accommodation measurement data representing a need for accommodation assistance as individually measured for the wearer for a number of object distances when determining the progression of focal power used for establishing the progression profile. This leads to an individually adapted progression of focal power in the progression profile and, hence, allows for achieving a high comfort with the resulting progression profile.

In order to assure that the wearer receives for each object distance the accommodation assistance he needs it is advantageous if the accommodation measurement data represents focal powers with an accuracy of 0.25 D or better, in particular 0.1 D or better, preferably 0.05 D or better, for example 0.01 D or better. In other words, the accommodation measurement by which the need for accommodation assistance for the individual wearer is derived should be performed such that the focal power derived from the measurement has an accuracy of 0.25 D or better, in particular 0.1 D or better, preferably 0.05 D or better, for example 0.01 D or better.

If the accommodation measurement data includes also near accommodation data representing a need for accommodation assistance as individually measured for the wearer for a near object distance, near power may be determined based on the near accommodation data. As a consequence, not only the progression of focal power but also the near power as the end point of the progression, can be individually adapted to a wearer. This allows for increasing the comfort achieved with the progression profile even further. The near power may, in particular, be given in form of an addition.

In a development of the inventive method determining the progression of focal power is done based on case history data representing the case history of the wearer in addition to the accommodation measurement data. Taking the case history into account allows for taking into account typical object distances for which the spectacle lens is to be used, typical gaze directions of the wearer for different object distances, etc. The progression profile may then be optimized for specific object distances often used by the wearer and/or specific gaze directions often used by the wearer which can lead to a very high comfort of the progression profile for these specific object distances and/or these specific gaze directions.

In an alternative or additional development of the inventive method, the progression of focal power may be determined based on eye movement measurement data representing the eye movement for a gaze change from distance vision to near vision as individually measured for the wearer in addition to the accommodation measurement data. When changing gaze from distance vision to near vision the gaze is lowered, i.e. the gaze direction moves downwards. In addition, when lowering the gaze, the gaze directions of the left eye and the right eye converge, which means that the gaze direction moves nasally for each eye. Using the eye movement measurement allows for determining an individual path along which the gaze direction changes when the gaze changes from distance vision to near vision. With such an individual path an even more comfortable progression profile can be determined.

The invention also provides a computer implemented method of determining a spectacle lens design for a power-variation lens including a corridor. The method comprising the steps of establishing a power distribution including a progression profile with a progression of focal power for the corridor, and determining the spectacle lens design by optimizing a numerical representation of a spectacle lens based on the established power distribution and a target design. The progression of focal power is determined based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances.

As described above, the state of the art uses models are to determine the progression of focal power in the progression profile and, thus, the progression of focal power in the corridor of a power-variation lens, which leads to spectacle lens designs for power-variation lenses that are less comfortable for an individual wearer than they could be. Unlike the state of the art, the inventive method of determining a spectacle lens design uses accommodation measurement data representing a need for accommodation assistance as individually measured for the wearer for a number of object distances for determining the progression of focal power in the progression profile of the power distribution. By this measure, spectacle lens designs for power-variation lenses with a highly individualized corridor can be established, which increases comfort for a wearer of a power-variation lens with such a spectacle lens design.

In order to assure that the wearer receives for each object distance the accommodation assistance he needs it is advantageous if the accommodation measurement data represents focal powers with an accuracy of 0.25 D or better, in particular 0.1 D or better, preferably 0.05 D or better, for example 0.01 D or higher. In other words, the accommodation measurement by which the need for accommodation assistance for the individual wearer is derived should be performed such that the focal power derived from the measurement has an accuracy of 0.25 D or better, in particular 0.1 D or better, preferably 0.05 D or better, for example 0.01 D or better.

In the computer implemented method of determining a spectacle lens design, at least one of a location, a length, a width and a path of the corridor may be determined based on at least one of eye movement measurement data representing the eye movement for a gaze change from distance vision to near vision as individually measured for the wearer and case history data representing the case history of the wearer in addition to the accommodation measurement data. This allows for further individualization of the corridor of the spectacle lens design and, hence, allows for increasing the comfort of a power-variation lens based on the respective lens design further.

If the accommodation measurement data includes also near accommodation data representing a need for accommodation assistance as individually measured for the wearer for a near object distance, near power may be determined based on the near accommodation data. As a consequence, not only the progression of focal power but also the near power as the end point of the progression, can be individually adapted to a wearer. This allows for increasing the comfort achieved with the spectacle lens design even further. The near power may, in particular, be given in form of an addition.

In order to allow for differences in the needs of the left eye and the right eye of a wearer, the spectacle lens design may include a first spectacle lens design for the left eye of the wearer and a second spectacle lens design for the right eye of the wearer. Then, separate first and second power distributions including separate first and second progression profiles with first and second progressions of focal power for the corridors are established for the left eye and the right eye of the wearer. In other words, a first power distribution including a first progression profile with a first progression of focal power is established for the corridor of the spectacle lens design for the left eye, and a second power distribution including a second progression profile with a second progression of focal power is established for the corridor of the spectacle lens design for the right eye. The first and second spectacle lens designs are separately determined by separately optimizing a first numerical representation of the first spectacle lens and a second numerical representation of the second spectacle lens based on the established first and second power distributions and first and second target designs. In other words, the first spectacle lens design is determined by optimizing a first numerical representation of the first spectacle lens based on the established first power distribution and a first target design, and the second the spectacle lens design is determined by optimizing a second numerical representation of the second spectacle lens based on the established second power distribution and a second target design. The progression of focal power is determined separately for the left eye and the right eye of the wearer, based on first accommodation measurement data representing a need for accommodation assistance as individually measured for the left eye of the wearer for a number of object distances and on second accommodation measurement data representing a need for accommodation assistance as individually measured for the right eye of the wearer for a number of object distances. In other words, a progression of focal power is determined for the left eye of the wearer, based on accommodation measurement data representing a need for accommodation assistance as individually measured for the left eye of the wearer for a number of object distances, and a progression of focal power is determined for the right eye of the wearer, based on accommodation measurement data representing a need for accommodation assistance as individually measured for the right eye of the wearer for a number of object distances. This development of the inventive method is particularly advantageous if the accommodation assistance needed for the left eye differs considerably from the accommodation assistance needed for the right eye.

According to another aspect of the present invention, it provides a computer program for establishing a progression profile for a power-variation lens. The computer program comprises instructions that, when executed on a computer, prompt the computer to determine a progression of focal power between a distance power and a near power and to establish the progression profile based on the determined progression of focal power and a path along which the gaze direction changes when the gaze changes from distance vision to near vision. Furthermore, the computer program comprises instructions that, when executed on a computer, prompt the computer to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances.

The inventive computer program for establishing a progression profile for a power-variation lens allows for executing the computer implemented method of establishing a progression profile for a power-variation lens on a computer and, thereby, for achieving the advantages mentioned with respect to the inventive computer implemented method of establishing a progression profile for a power-variation lens. The computer program may further comprise instructions that, when executed on a computer, prompt the computer to perform the further developments mentioned with respect to the inventive computer implemented method of establishing a progression profile for a power-variation lens.

According to a still another aspect of the present invention, it provides a computer program for determining a spectacle lens design for a power-variation lens including a corridor. The computer program comprises instructions that, when executed on a computer, prompt the computer to establish a power distribution including a progression profile with a progression of focal power for the corridor, and to determine the spectacle lens design by optimizing a numerical representation of a spectacle lens based on the established power distribution and a target design. Furthermore, the computer program comprises instructions that, when executed on a computer, prompt the computer to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances.

The inventive computer program for determining a spectacle lens design allows for executing the computer implemented method of determining a spectacle lens design on a computer and, thereby, for achieving the advantages mentioned with respect to the inventive computer implemented method of determining a spectacle lens design. The computer program may further comprise instructions that, when executed on a computer, prompt the computer to perform the further developments mentioned with respect to the inventive computer implemented method of determining a spectacle lens design.

According to a further aspect of the present invention, it provides a non-volatile computer readable storage medium with instructions stored thereon for establishing a progression profile for a power-variation lens. The instructions, when executed on a computer, prompt the computer to determine a progression of focal power between a distance power and a near power; and to establish the progression profile based on the determined progression of focal power and a path along which the gaze direction changes when the gaze changes from distance vision to near vision. Furthermore, the instructions, when executed on a computer, prompt the computer to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances.

The inventive non-volatile computer readable storage medium allows for loading the inventive computer program for establishing a progression profile for a power-variation lens on a computer and, thus, for performing the inventive computer implemented method of establishing a progression profile for a power-variation lens on a computer so that the advantages mentioned with respect to the inventive computer implemented method of establishing a progression profile for a power-variation lens can be realized. Moreover, the non-volatile computer readable storage medium may include further instructions that, when loaded to a computer, allow for realizing the described further developments of the inventive computer implemented method of establishing a progression profile for a power-variation lens.

According to a further aspect of the present invention, it provides a non-volatile computer readable storage medium with instructions stored thereon for determining a spectacle lens design for a power-variation lens including a corridor. The instructions, when executed on a computer, prompt the computer to establish a power distribution including a progression profile with a progression of focal power for the corridor, and to determine the spectacle lens design by optimizing a numerical representation of a spectacle lens based on the established power distribution and a target design. Furthermore, the instructions, when executed on a computer, prompt the computer to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances.

The inventive non-volatile computer readable storage medium allows for loading the inventive computer program for determining a spectacle lens design on a computer and, thus, for performing the inventive computer implemented method of determining a spectacle lens design on a computer so that the advantages mentioned with respect to the inventive computer implemented method of determining a spectacle lens design can be realized. Moreover, the non-volatile computer readable storage medium may include further instructions that, when loaded to a computer, allow for realizing the described further developments of the inventive computer implemented method of determining a spectacle lens design.

According to a still further aspect of the present invention, it provides a data processing system for establishing a progression profile for a power-variation lens. The data processing system comprises a processor and at least one memory, where the processor is configured, on the basis of instructions of a computer program stored in the memory, to determine a progression of focal power between a distance power and a near power; and to establish the progression profile based on the determined progression of focal power and a path along which the gaze direction changes when the gaze changes from distance vision to near vision. Furthermore, the processor is configured, on the basis of the instructions of the computer program stored in the memory, to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances. The inventive data processing system may be a general purpose computer to which an inventive computer program according to the third aspect of the invention has been loaded, or, a dedicated hardware with a processor and a memory storing instructions for performing the inventive method.

The inventive data processing system allows for performing the inventive computer implemented method of establishing a progression profile for a power-variation lens. Hence, the data processing system allows for realizing the advantages described with respect to the inventive computer implemented method of establishing a progression profile for a power-variation lens. Furthermore, the processor may be configured, on the bases of the instructions in the computer program stored in the memory, to perform the further developments mentioned with respect to the inventive computer implemented method of establishing a progression profile for a power-variation lens.

According to a still further aspect of the present invention, it provides a data processing system for determining a spectacle lens design for a power-variation lens including a corridor. The data processing system comprises a processor and at least one memory, where the processor is configured, on the basis of instructions of a computer program stored in the memory, to establish a power distribution including a progression profile with a progression of focal power for the corridor, and to determine the spectacle lens design by optimizing a numerical representation of a spectacle lens based on the established power distribution and a target design. Furthermore, the processor is configured, on the basis of the instructions of the computer program stored in the memory, to determine the progression of focal power based on accommodation measurement data representing a need for accommodation assistance as individually measured for the wearer for a number of object distances. The number of object distances may be as small as one but is preferably at least two. In typical cases the number of object distances would be at most ten object distances and would in most cases not exceed five object distances. In many cases, the number of object distances would lie in the range between two and four object distances. The inventive data processing system may be a general purpose computer to which an inventive computer program according to the third aspect of the invention has been loaded, or, a dedicated hardware with a processor and a memory storing instructions for performing the inventive method.

The inventive data processing system allows for performing the inventive computer implemented method of determining a spectacle lens design. Hence, the data processing system allows for realizing the advantages described with respect to the inventive computer implemented method of determining a spectacle lens design. Furthermore, the processor may be configured, on the bases of the instructions in the computer program stored in the memory, to perform the further developments mentioned with respect to the inventive computer implemented method of determining a spectacle lens design.

According to a still further aspect of the present invention, it provides an apparatus for establishing a progression profile of a power-variation lens. The apparatus comprises an inventive data processing system for establishing a progression profile for a power-variation lens and a measuring device for measuring at least accommodation measurement data representing a need for accommodation assistance for a number of object distances.

The inventive apparatus for establishing a progression profile for a power-variation lens allows for performing the inventive method of establishing a progression profile for a power-variation lens and the measurement for acquiring the accommodation measurement data with a single device.

In a further development of the apparatus for establishing a progression profile for a power-variation lens, the measuring device is adapted to measuring eye movement measurement data representing the eye movement for a gaze change from distance vision to near vision as individually measured for the wearer. This development allows for not only establishing a progression profile for a power-variation lens and the measurement for acquiring the accommodation measurement data with a single device, but also for acquiring the eye movement measurement data. With the acquired date the apparatus allows for determining an individual progression profile including an individual path along which the gaze direction changes when the gaze changes from distance vision to near vision.

According to a still further aspect of the present invention, it provides an apparatus for establishing a progression profile of a power-variation lens. The apparatus comprises an inventive data processing system for establishing a progression profile for a power-variation lens or an inventive data processing system determining a spectacle lens design for a power-variation lens including a corridor. In addition, the apparatus comprises a measuring device for measuring at least accommodation measurement data representing a need for accommodation assistance for a number of object distances.

The inventive apparatus allows for acquiring the accommodation measurement data and for performing the inventive method of establishing a progression profile for a power-variation lens or the inventive method of determining a spectacle lens design for a power-variation lens including a corridor with a single device.

According to a still further aspect of the invention, it provides method of establishing a progression profile for a power-variation lens. The method comprises the steps of measuring a need for accommodation assistance for the wearer for a number of object distances and providing accommodation measurement data representing the measured need for accommodation assistance, and of performing the inventive computer implemented method of establishing a progression profile for a power-variation lens. The inventive method allows for basing the progression profile for a power-variation lens on a measurement. Performing the computer implemented method of establishing a progression profile for a power-variation lens may include performing the further developments of said computer implemented method.

According to a still further aspect of the invention, it provides method of determining a spectacle lens design for a power-variation lens including a corridor. The method comprises the steps of measuring a need for accommodation assistance for the wearer for a number of object distances and providing accommodation measurement data representing the measured need for accommodation assistance, and of performing the inventive computer implemented method of determining a spectacle lens design for a power-variation lens including a corridor. The inventive method allows for basing the progression profile in the corridor of the power-variation lens on a measurement. Performing the computer implemented method of determining a spectacle lens design for a power-variation lens including a corridor may include performing the further developments of said computer implemented method.

Further features, properties and advantages of the invention will become clear from the following description of embodiments in conjunction with the accompanying drawings.
- Figure 1: shows a method of determining a spectacle lens design for a power-variation lens that is individually adapted to a wearer in form of a flow chart.
- Figure 2: shows, in form of a flow chart, a method of ascertaining an addition.
- Figure 3: shows, in form of a flow chart, a method determining a progression of focal power in a corridor.
- Figure 4: shows a section trough spectacle lens design determined according to the method of figure 1.
- Figure 5: shows a section trough spectacle lens design as determined according to the state of the art.
- Figure 6: shows a system for determining a spectacle lens design individually adapted to a wearer.
- Figure 7: shows a typical spectacle lens design for a progressive addition lens.

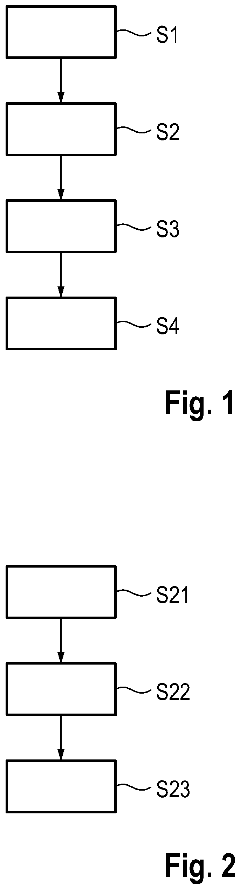

As an exemplary embodiment of the invention, a method of determining a spectacle lens design for a power-variation lens including a corridor that is individually adapted to a wearer of a spectacle lens manufactured according to the spectacle lens design will be described with respect to figures 1 to 6. Some of the method steps described therein may be performed on a computer or any other suitable data processing systems. All measurement data required for performing the method may be sent to and received by a computer which then calculates the values necessary for determining the spectacle lens design. The data processing system may read the measurement data from a suitable storage medium or receive the measurement data from a network, like a local area network (LAN) or the Internet. As an alternative, the method may be performed with an apparatus that includes a suitable data processing system and a measurement device for measuring the data required for performing the method.

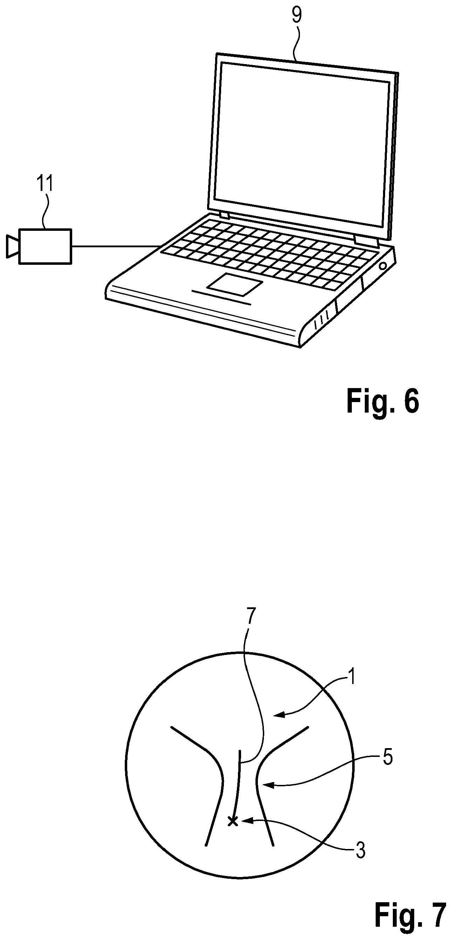

The spectacle lens design to be determined in the present exemplary embodiment is a spectacle lens design for a progressive addition lens (PAL) which is a specific kind of power-variation lens. A spectacle lens design for a progressive addition lens is schematically shown in figure 7. The spectacle lens design includes a distance portion 1 with a distance power for distance vision, a near portion 3 with a near power for near vision, and a corridor 5 with a progression of focal power from the distance power to the near power. Hence, the progression of focal power in the corridor represents focal powers for assisting accommodation for intermediate object distances.

In a first step S1 of the method, the distance power for the distance portion 1 is ascertained. Ascertaining the distance power may be done by measuring the distance power by means of a subjective or objective refraction measurement. This measurement may be part of the method of determining the spectacle lens design. In other cases, the measurement may be performed by an eye care professional who makes out a prescription for the wearer. Then, the distance power used when determining the spectacle lens design may be taken from the wearer's prescription

In a second step S2 of the method, a near power for the near portion 3 is ascertained. Like the distance power, the near power may be ascertained either by a subjective or objective refraction measurement or by taking the near power from the wearer's prescription. Typically, the prescription does not contain an explicit value for the near power but an addition, sometime also called addition power. This addition is to be added to the distance power to arrive at the near power. Likewise, the refraction measurement may determine the addition instead of an explicit value for the near power for. In the present exemplary embodiment ascertaining the near power is done by determining an addition using near accommodation measurement data representing a need for accommodation assistance as individually measured for the wearer for a near object distance, as will be described later with respect to figure 2.

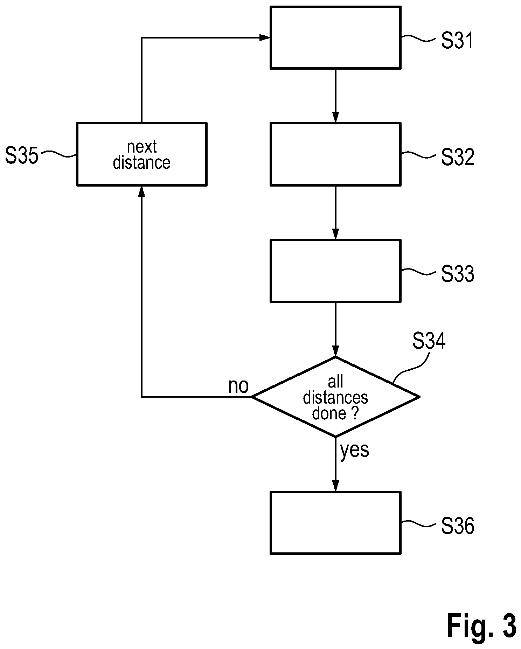

In step S3, a power distribution is established based on the distance power, the near power, and an object distance model. The power distribution represents desired powers for a large number of different gaze directions (typically for at least 1000 to 1500 gaze directions) through the spectacle lens to be designed. The object distance model defines for each of the gaze directions an object distance for which the respective power of the power distribution shall be suitable. In particular, it defines an object distance of a few meters like two or three meters for the distance portion 1, an object distance below 0,5 meter, for example a typical reading distance like 40 cm, for the near portion 3, and intermediate object distances, i.e. an object distance between the near distance and a few meters, for the corridor 5. The power distribution in the corridor 5 is represented by a progression profile. This progression profile provides a progression of focal power along a path 7 which represents a change of gaze direction when the gaze changes from distance vision to near vision. As the gaze direction depends on the distance of the object at which a person looks a location on the path represents a certain intermediate object distance. In the state of the art, the progression of focal power along the path 7 is determined based on model that assumes a certain functional relationship between the object distance and the focal power in the range of the intermediate object distances. This functional relationship may be linear or non-linear. According to the invention, the progression of focal power present in the progression profile is not based on a model but is based on a measurement producing accommodation measurement data representing, for a number of different object distances, the respective accommodation assistance actually needed by the wearer. The measurement for acquiring the accommodation measurement data may be performed in the context of the method of determining the spectacle lens design, or the accommodation measurement data may be taken from a prescription, or a supplement of the prescription. In the present exemplary embodiment, the method of the determining the spectacle lens design includes the acquisition of the accommodation measurement data. The acquisition of the accommodation measurement data and the determination of the progression of focal power will be described later with respect to figure 3.

The power distribution established in step S3 is used in step S4 to optimize a parameterized working surface of a numerical representation of the spectacle lens the design of which is to be determined. In the present exemplary embodiment, the working surface is represented by points at which rays outgoing from the eye and running along the gaze directions pass the working surface. These points are referred to as ray passing points in the following. The shape of working surface is defined by the values of parameters. In the optimization process, these parameters are iteratively optimized with a value of a merit function MF being calculated after each iteration. In the present exemplary embodiment, the merit function is a weighted sum MF = ∑ₙ wₙ(Dₙ - D_{n,tagrget})² in which each Dₙ represents an actual deviation of the actual focal power achieved with the current iteration of the working surface in the direction of a ray passing the n-th ray passing point from the focal power given for that direction in the power distribution, each D_{n,tagrget} represents an allowed target deviation of the actual focal power achieved with the current iteration of the working surface in the direction of a ray passing the n-th ray passing point from the focal power given for that direction in the power distribution, and wₙ represents a weight that determines how much the difference calculated for the n-th ray passing point influences the value of the merit function. Calculating the actual focal power achieved with the current iteration is done by means of ray tracing. The Iterations continue until the value of the merit function meets a termination condition, for example value of the merit function falls below a threshold, or the value of the merit function reaches a minimum. When the iterations are finished, the numerical representation of the spectacle lens with the optimized working surface constitutes the finished spectacle lens design.

Next, ascertaining the near power for the near portion 1 of the spectacle lens design will be described with respect to figure 2. Ascertaining the near power is done by ascertaining an addition to be added to the distance power. In the simplest case, ascertaining the addition can be done by taking the addition given in the prescription. However, in the present exemplary embodiment, the addition is determined based on an individual measurement which is performed in the context of the method of determining the spectacle lens design. In this measurement a need for accommodation assistance for the near distance is measured for the wearer. The need for accommodation assistance as measured for the wearer forms near accommodation measurement data, and the addition is determined based on the near accommodation measurement data.

In a first step S21 of determining the addition, a preliminary addition addₚᵣₑ is determined. This determination can be done with any state of the art method for determining an addition. In the present exemplary embodiment, the addition given in the prescription is taken as preliminary addition addₚᵣₑ. Then, in step S22, the depth of field T for the near distance is determined for the wearer. Suitable methods for determining the depth of field T of the wearer are described in DE 10 2009 004 866 B4. Therefore it is referred to this document for further details of how to determine the depth of field T.

Once the preliminary addition addₚᵣₑ and the depth of field T are determined the addition is calculated in step S23 according to equation add = addₚᵣₑₗ - ωT (step S23), where w represents a real number in the range between greater than 0 and 1. The real number w represents an individual weight which can, for example, be ½ or 2/3. Determining the addition from the preliminary addition and the depth of field is described extensively in DE 10 2009 004 866 B4. Therefore, it is referred to this document for further details regarding the determination of the addition from the preliminary addition and the measured depth of field. The depth of field T is measured with an accuracy that allows the addition add to be calculated with an accuracy of 0.25 D or better. In the present exemplary embodiment, the depth of field T is measured with an accuracy that allows the addition add to be calculated with an accuracy of 0.01 D although other accuracies of the addition add that are better than 0.25 D like 0.1 D or 0.05 D may be sufficient as well.

According to the invention, the progression of focal power is determined based on accommodation measurement data. To this end, a focal power for at least one intermediate object distance, called intermediate focal power in the following, is determined based on the accommodation measurement data. However, typically intermediate focal powers for a number of intermediate object distances may be determined, for example, two, three, or more intermediate focal powers Each intermediate focal power represents a focal power between the distance power and the near power.

In the present exemplary embodiment the intermediate distance(s) is/are taken from the case history of the wearer, from which the typical use of a spectacle lens to be formed based on the spectacle lens design can be learned. In particular, it can be learned in which object distances the objects the wearer typically looks at lie in the most cases. For example, if the wearer often works with the computer a typical intermediate object distance would be the distance between the eyes and the computer monitor. If, in another example, the wearer is a professional driver, an intermediate object distance could be the distance between the eyes and the dashboard of the car, another intermediate object distance the distance between the eyes and the steering wheel, still another intermediate object distance the distance between the eyes and the center console, etc.

The steps of determining the progression of focal power will be described with respect to Figure 3.

In a first step (step S31) a first preliminary intermediate focal power for a first intermediate object distance is determined. Determining the preliminary intermediate focal power can be done with any method known in the state of the art for determining the progression of focal power. For example, the preliminary intermediate focal power could be calculated based on the distance power and a linear or non-linear functional relationship between the object distances and the focal power in the range of the intermediate object distances, such as the functional relationships used in the stat of the art.

Next, in step S32 the depth of field for the intermediate object distance is determined. Determining the depth of field for the intermediate object distance can be done with the same methods as used for determining the depth of field for near vision. These methods are described extensively in DE 10 2009 004 866 B4 which it is referred to for further details regarding the determination of the depth of field.

Based on the preliminary intermediate focal power and the determined depth of field the f for the intermediate object distance is calculated based on the equation ifp = ifpₚᵣₑₗ - ωT in step S33, where ifp represents the intermediate focal power, ifp_{preliminary} represents the preliminary intermediate focal power, T represents the depth of field as measured, and w represents a wide as it has been described with respect to determining the addition. For this equation the same principles apply as for the equation for determining the addition. As these principles are extensively described in DE 10 2009 004 866 B4 this document is referred to for further details. The depth of field T is measured with an accuracy that allows the intermediate focal power ipf to be calculated with an accuracy of 0.25 D or better. In the present exemplary embodiment, the depth of field T is measured with an accuracy that allows the intermediate focal power ipf to be calculated with an accuracy of 0.01 D although other accuracies of the intermediate focal power ipf that are better than 0.25 D like 0.1 D or 0.05 D may be sufficient as well.

Then, in step S34, it is checked whether the intermediate focal powers for all desired intermediate object distances are determined. If not all intermediate focal powers for all intermediate object distances are determined the method proceeds to step S35 in which a new intermediate object distance is chosen, and then the method returns to step S31.

If, on the other hand, it is determined in step S34 that the intermediate focal powers for all intermediate object distances are determined the method proceeds to step S36 in which the progression profile, i.e. the a progression of focal power along the path 7 which represents a change of gaze direction when the gaze changes from distance vision to near vision, is established based on the determined intermediate focal powers. Determining a continuous progression of focal power along said path 7 can, for example, be done by fitting a curve to the values of the intermediate focal powers, the first focal power and the second focal power. The path 7 can be a standard path taken from a standard geometry of the corridor that may, for example, be taken from a standard spectacle lens design for a power-variation lens. However, as an alternative, it is possible to measure the eye movement of the wearer that comes along with a gaze change from distance vision to near vision, to establish eye movement measurement data representing the measured eye movement and to determine the path 7 along which progression of focal power in the progression profile shall take place based on the eye movement measurement data. Measuring the eye movement measurement may, for example, be done by determining gaze directions for a number of different intermediate object distances. In addition to determining the path 7, location, length and width of the corridor 5 can be determined from the eye movement measurement data. The length of the corridor 5 may be determined from the amount of lowering the gaze taken from the eye movement measurement data, and the width of the corridor 5 may be determined from the amount of convergence of the gaze. Hence, based on the eye movement measurement data the corridor 5 can be highly individualized for the wearer. Together with the individualized progression of focal power along an individual path 7 in the corridor 5 a highly individualized spectacle lens design can be determined which, in turn, provides a very high comfort for the wearer.

If the method described so far is performed one time for the left eye of the wearer and another time for the right eye of the wearer it become also possible to individually adapted the spectacle lens design to the each of the wearer's eyes.

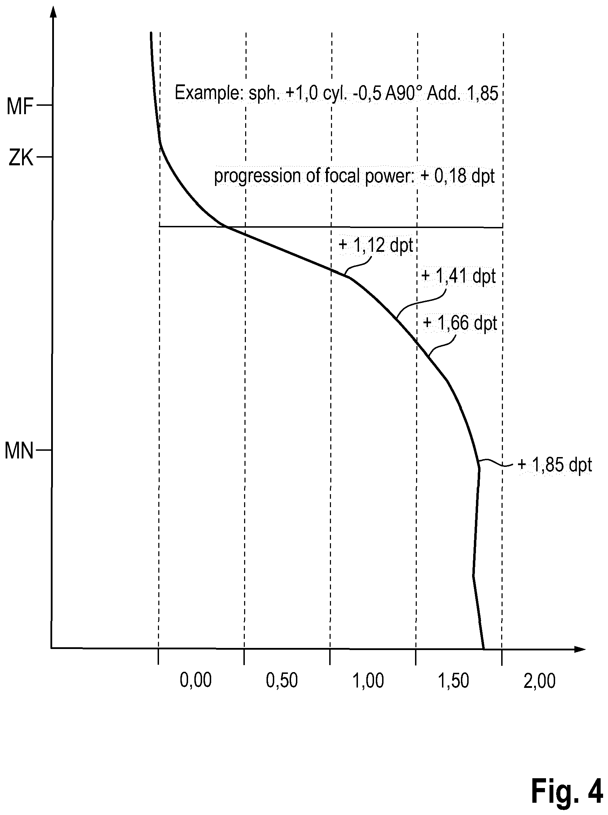

An example for a spectacle lens with a spectacle lens design having a progression profile determined according to the described method, i.e. based on accommodation measurement data, is shown in figure 4. The figure shows the power provided by spectacle lens design along a line through the distance reference point MZ, the fitting cross ZF and the near reference point MN. The distance power according to the prescription is +1 D for spherical power and -0.5 D for cylindrical power with an axis of 90 degree. The addition determined according to the method described with respect to figure 2 is 1.85 D, where the addition is determined outgoing from a preliminary addition of 2 D as given in the prescription. The intermediate focal powers in the progression profile of the corridor 5 as determined according to the method described with respect to figure 3 are 1.12 D, 1.41 D and 1.66 D.

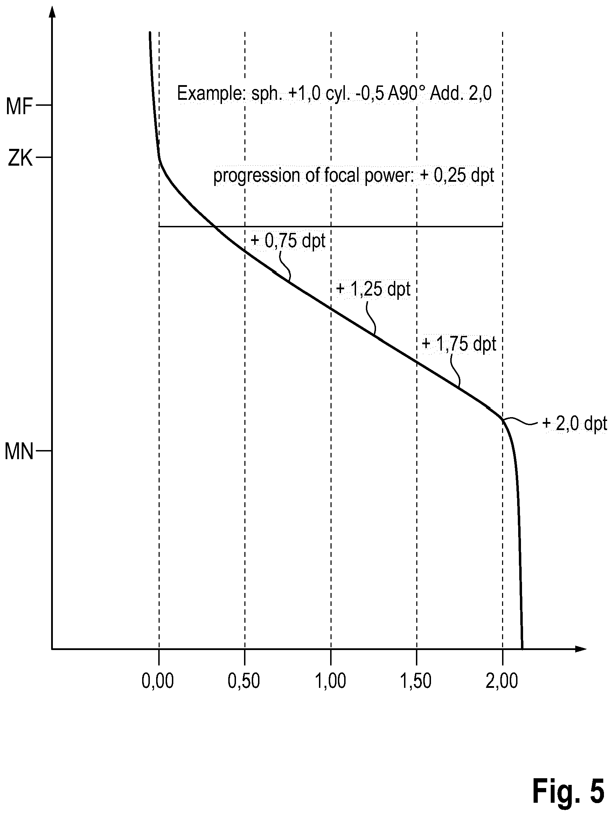

As a comparison example, Figure 5 shows a section through a spectacle lens with a spectacle lens design having a progression profile as determined according to the state of the art for the same prescription values as used in the example shown in figure 4. The progression of focal power in the progression profile of figure 5 is calculated according to the state of the art based on a linear functional relationship between the object distance and the focal power in the range of the intermediate object distances. It can be seen that the intermediate focal powers in the state of the art progression profile differ considerably from the intermediate focal powers of the progression profile established based on the accommodation measurement data, which shows that, in terms of adaption to the wearer, the state of the art spectacle lens design is inferior to the inventive spectacle lens design. Likewise, the near power of the state of the art spectacle lens design differs from the near power established based on the near accommodation measurement data, which again shows that, in terms of adaption to the wearer, the state of the art spectacle lens design is inferior to the inventive spectacle lens design.

A system for determining a spectacle lens design individually adapted to a wearer is shown in figure 6. This system comprises a computer 9 or any other suitable data processing system and a measuring device 11 by which the depth of field can be measured for various object distances to acquire accommodation measurement data and near accommodation measurement data. Moreover, in the present exemplary embodiment, the measuring device 11 is also adapted to determine gaze directions of the wearer for different object distances and, thereby, to acquiring eye movement data when the gaze changes from distance vision to near vision. The accommodation measurement data and eye movement data acquired by the measuring device 11 are sent to the computer 9 which also receives the prescription data and performs the inventive method as exemplary described with respect to figures 1 to 3 based on the received data by executing a computer program including instructions for performing the method. The computer program may be loaded to the computer from a non-volatile computer readable storage medium, such as a flash memory, a DVD, or any other suitable storage medium, or it may be received from a network such as, for example, a local area network or the internet.

The inventive methods of determining a progression profile and of determining a spectacle lens design illustrated in the exemplary embodiments allow for establishing highly individualized progression profiles and, thus, highly individualized spectacle lens designs. Moreover, it allows for determining a progression profile without the quantization in 0.25 D steps used in the state of the art.

The present invention has been described with respect to exemplary embodiments thereof for illustrative purposes. A person skilled in the art recognizes that one can depart from the exemplary embodiments within the scope of the present invention. As a non-exclusive example, other values that ½ or 2/3 are possible for the weight w. Therefore, the present invention shall not be delimited by the exemplary embodiments but only by the depended claims.

## Claims

1. A computer implemented method of establishing a progression profile for a power-variation lens, the method comprising the steps of:
- determining a progression of focal power between a distance power and a near power; and
- establishing the progression profile based on the determined progression of focal power and a path (7) along which the gaze direction changes when the gaze changes from distance vision to near vision;
**characterized in that**
determining the progression of focal power is done based on accommodation measurement data representing a need for accommodation assistance as individually measured for the wearer for a number of object distances.

2. The method as claimed in claim 1, **characterized in that** the accommodation measurement data represents focal powers with an accuracy of 0.25 D or better.

3. The computer implemented method of claim 1 or claim 2, **characterized in that** the accommodation measurement data includes near accommodation measurement data representing a need for accommodation assistance as individually measured for the wearer for a near object distance, and a near power is determined based on the near accommodation data.

4. The computer implemented method of any of the claim 1 to 3, **characterized in that** determining the progression of focal power is done based on case history data representing the case history of the wearer in addition to the accommodation measurement data.

5. The computer implemented method of any of the claim 1 to 4, **characterized in that** the progression of focal power is determined based on eye movement measurement data representing the eye movement for a gaze change from distance vision to near vision as individually measured for the wearer in addition to the accommodation measurement data.

6. A computer implemented method of determining a spectacle lens design for a power-variation lens including a corridor (5), the method comprising the steps of:
- establishing a power distribution including a progression profile with a progression of focal power for the corridor (5),
- determining the spectacle lens design by optimizing a numerical representation of a spectacle lens based on the established power distribution and a target design,
**characterized in that**
the progression of focal power is determined based on accommodation measurement data representing a need for accommodation assistance as individually measured for the wearer for a number of object distances.

7. The computer implemented method of claim 6, **characterized in that**
- the spectacle lens design includes a first spectacle lens design for the left eye of the wearer and a second spectacle lens design for the right eye of the wearer,
- separate first and second power distributions including separate first and second progression profile with first and second progressions of focal power for the corridors (5) are established for the left eye and the right eye of the wearer, respectively,
- the first and second spectacle lens designs are separately determined by separately optimizing a first numerical representation of the first spectacle lens and a second numerical representation of the second spectacle lens based on the established first and second power distributions and first and second target designs,
**characterized in that**
the progression of focal power is determined separately for the left eye and the right eye of the wearer, based on first accommodation measurement data representing a need for accommodation assistance as individually measured for the left eye of the wearer for a number of object distances and on second accommodation measurement data representing a need for accommodation assistance as individually measured for the right eye of the wearer for a number of object distances.

8. A computer program for establishing a progression profile for a power-variation lens, comprising instructions that, when executed on a computer, prompt the computer to
- determine a progression of focal power between a distance power and a near power; and
- establish the progression profile based on the determined progression of focal power and a path (7) along which the gaze direction changes when the gaze changes from distance vision to near vision;
**characterized in that**
the computer program comprises instructions that, when executed on a computer, prompt the computer to determine the progression of focal power based on accommodation measurement data representing a need for accommodation assistance as individually measured for the wearer for a number of object distances.

9. A non-volatile computer readable storage medium with instructions stored thereon for establishing a progression profile for a power-variation lens, the instructions, when executed on a computer, prompt the computer to
- determine a progression of focal power between a distance power and a near power; and
- establish the progression profile based on the determined progression of focal power and a path (7) along which the gaze direction changes when the gaze changes from distance vision to near vision;
**characterized in that**
the instructions, when executed on a computer, prompt the computer to determine the progression of focal power based on accommodation measurement data representing a need for accommodation assistance as individually measured for the wearer for a number of object distances.

10. A data processing system (9) for establishing a progression profile for a power-variation lens, comprising a processor and at least one memory, where the processor is configured, on the basis of instructions of a computer program stored in the memory, to
- determine a progression of focal power between a distance power and a near power; and
- establish the progression profile based on the determined progression of focal power and a path (7) along which the gaze direction changes when the gaze changes from distance vision to near vision;
**characterized in that**
the processor is configured, on the basis of the instructions of the computer program stored in the memory, to determine the progression of focal power based on accommodation measurement data representing a need for accommodation assistance as individually measured for the wearer for a number of object distances.

11. An apparatus for establishing a progression profile for a power-variation lens or for establishing a spectacle lens design for a power-variation lens including a corridor (5), the method comprising the system comprising a data processing system (9) as claimed in claim 15 or in claim 16 and a measuring device (11) for measuring at least accommodation measurement data representing a need for accommodation assistance for a number of object distances.

12. The apparatus according to claim 11, **characterized in that** measuring device (11) is adapted to measuring eye movement measurement data representing the eye movement for a gaze change from distance vision to near vision as individually measured for the wearer.

13. A method of establishing a progression profile for a power-variation lens, the method comprising the steps of:
- measuring a need for accommodation assistance for the wearer for a number of object distances and providing accommodation measurement data representing the measured need for accommodation assistance; and
- performing the computer implemented method as claimed in any of the claims 1 to 5.
